# EUROPEAN PATENT SPECIFICATION

(11) **EP 3 474 406 B1**
(45) Date of publication and mention of the grant of the patent: **27.04.2022**
(21) Application number: 18200691.6
(22) Date of filing: 16.10.2018
(51) Int. Cl.: H02H 9/04, H05B 33/08, H05B 47/24

(54) **DEVICE FOR OVERVOLTAGE PROTECTION OF LED STREET LIGHTING**
VORRICHTUNG ZUM ÜBERSPANNUNGSSCHUTZ FÜR LED-STRASSENBELEUCHTUNG
DISPOSITIF DE PROTECTION CONTRE LES SURTENSIONS D'ÉCLAIRAGES DE RUE À DEL

(30) Priority: 17.10.2017 CZ 20170664
(43) Date of publication of application: 24.04.2019
(73) Proprietor: KIWA sk, s.r.o., 949 01 Nitra (SK)
(72) Inventor: Cernicka, Jozef, 949 01 Nitra (SK); Blahunka, Juraj, 949 01 Nitra (SK)
(74) Representative: Musil, Dobroslav

(56) References cited:
- CN-U- 201 589 156
- CN-U- 201 636 674

## Description

### Technical field

The present invention relates to a device for the protection of LED street lighting against overvoltage which comprises overvoltage protection connected to individual L, N, PE conductors of the electric power supply network in front of the point of connection of a driver to the individual L, N, PE conductors of the electric supply network, whereby at least one LED panel is connected to the driver, while driver and LED panel are situated in housing of the LED lighting.

### Background art

In the field of lighting, the situation with regard to the light sources used has been dramatically changing recently, when LED systems have been massively used as sources of light. This is mainly due to a significant reduction in the price of LEDs, while a key factor in favour of using LEDs is low power consumption compared to other light sources.

The trend towards using LEDs as a source of light is also reflected in street lighting, i.e. the lighting of streets, roads, squares, paths, areas, etc., but it brings other specific conditions affecting especially the functionality, durability and resistance of the street lighting systems. Since the light sources of street lighting are placed on outdoor poles and posts and electricity for street lighting flows from the power source through wires in the air or under the ground for relatively long distances, there specific conditions have to be fulfilled with regard to the protection of the light sources of street lighting from overvoltage because it is known from practice as well as from experiments in a testing room that without the use of a device for overvoltage protection, the effect of overvoltage on the lighting unit is completely destructive, as both the series resistance ballast and the LED elements are destroyed, or with less energy content of the pulse, only part of the LED lighting unit will be destroyed. In any case, however, the lighting unit will become inoperative and repair or even replacement of the lighting unit will be required.

Apart from the required performance, the protection of the light sources of street lighting against overvoltage must also meet the necessary conditions for overall outdoor resistance, including conducting overvoltage away in the event of various types of overvoltage by which the lighting unit is endangered.

For outdoor use, a high ingress protection rating - IP 65 or IP 66 - is generally required for street lighting, whereby the device for overvoltage protection must meet the electrical, electro-mechanical and physical requirements set by, e.g., standard EN 616 43-11: 2013.

Using LED technology for street lighting has created a separate problem of protecting these systems against overvoltage because it is known that LED elements are very sensitive to overvoltage compared to older types of light sources and lighting units. Especially during summer thunderstorms, due to, for example, nearby lightning strikes in the ground, etc., there is a high failure rate of LED lights in street lighting, unless these LEDs are properly protected against the effects of overvoltage. The use of overvoltage protection devices is a well-known means for the protection against overvoltage in various areas, including the protection of LED street lighting.

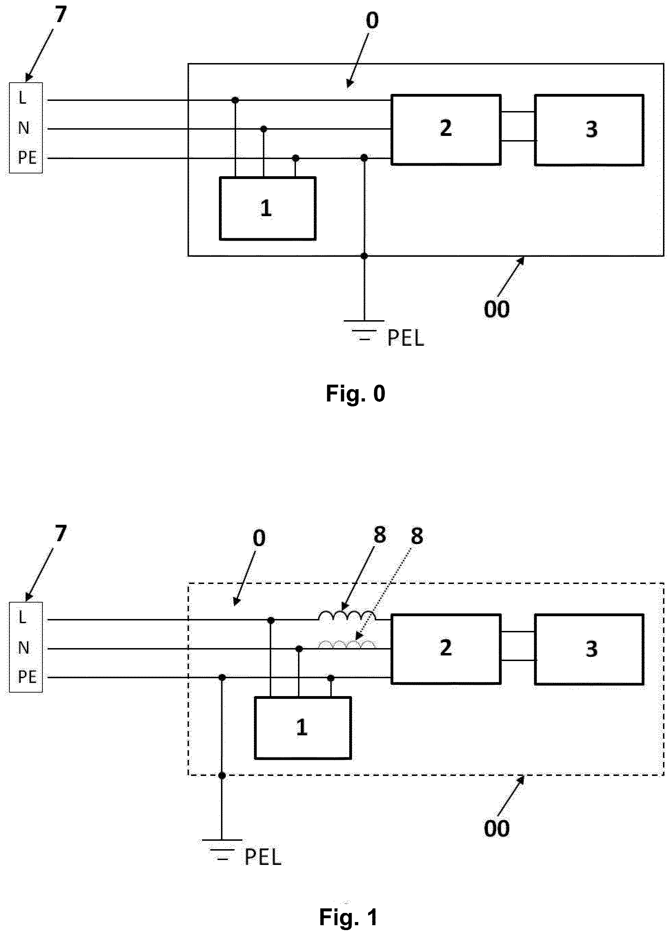

LED-based street lighting units are typically supplied from the public power grid with alternating current having a voltage of 230 V and a frequency of 50 Hz. In the lighting unit housing a driver is located, in which the alternating current is converted into direct current having a voltage required for the power supply of the LED elements of the lighting unit. These LED light elements of the lighting unit are also located in the lighting unit housing in such a manner that sufficient heat dissipation from the LED elements is ensured. The lighting unit housing, usually made of die-cast aluminum alloy, is mounted on a street lighting pole or post via a boom arm. The post or pole is anchored to the ground. The boom arm is metal, the post or pole is made of metal or reinforced concrete (steel reinforcement). This constitutes an electrically conductive connection of the lighting unit housing to the ground, as the reinforced concrete pole establishes a conductive connection to the ground, even though it has a significantly higher electrical resistance than a steel pole. The electrical power is supplied, as already mentioned, through overhead cables or cables laid underground. The device for overvoltage protection is currently placed in the lighting unit housing where the device for overvoltage protection is connected to the conductors L, N, and PE of the power supply before the point of connection the driver to the conductors L, N, and PE of the power supply. This connection according to the prior art is shown in Fig. 0. As is well-known, the lighting unit may be endangered by overvoltage in the direction from the power supply or from the ground (indicated symbolically in Fig. 0 by a wave), whereby the overvoltage protection, as is defined by the essence of its function, ensures the balancing of the potentials between the L, N, PE conductors at the level of the protection level Up (according to EN 61643-11), which means that when the overvoltage protection is affected by the current wave, the maximum potential difference between the conductors is equal to Up. This also applies to the input conductors of the driver, with respect to the mutual non-resistant connection of the conductors. This known use of the overvoltage protection device reduces the risk of damage caused by overvoltage, but practice has shown that it does not reduce this risk sufficiently, because despite the use of a properly designed overvoltage protection device, the LED lighting units of street lighting are relatively frequently damaged by overvoltage.

CN 201589156 U discloses a particular embodiment of a LED-based street lighting that does not solve the relationship between the lighting housing and the ground conductor, whereas the high ground potential generated by lightning strikes near the lighting installation, so-called near lightning strikes, can cause breakdown to LED elements, which dramatically reduces durability of this solution. Another disadvantage of the solution is the placement of the device for overvoltage protection into driver of the LED elements and further onto exterior of the LED lighting housing made as heat sink, which requires additional weather protection, in particular "high coverage of device for overvoltage protection" (high IP class), including high coverage of external connections, which significantly increases costs and risk of manufacturing defects etc. Furthermore, CN 201589156 describes location of the fuses directly in the device for overvoltage protection, which is disadvantageous, since only single fuse located at the foot of the pole and connected in the supply line in front of all electrical elements of the lighting is usually used. CN 201589156 thus represents a relatively complicated construction with respect to the used number of elements, which is dimensionally and economically demanding.

The aim of the present invention is therefore to improve the protection of LED lighting units of street lighting against overvoltage.

### Principle of the invention

The aim of the invention is achieved by a device for overvoltage protection of LED street lighting according to claim 1, whose principle consists in that housing is conductively connected to the ground or to the local ground and in housing between the connection of the overvoltage protection device to the individual L, N, PE conductors of the electric power supply network and the connection of the driver to the individual L, N, PE conductors of the electrical power supply network a choke for asymmetric distribution of the energy of a current wave is connected in the phase conductor L and/or in the neutral conductor N between the overvoltage protection device and the driver.

The device according to the invention substantially reduces the load of the driver by the current wave and transfers this load to the overvoltage protection which is constructed for such situations, or, more specifically, for such an increased load, and therefore the probability that there will be damage to the driver due to such an overvoltage, induced, e.g., by a nearby lightning strike, is considerably lower compared to the known state of the art without using a choke in a LED lighting unit for street lighting. The use of the separating choke is in itself a well-known method of separating several overvoltage protection devices, but only the protection of a less efficient overvoltage protection device against overloading is achieved. The solution according to the invention further allows the choke to be integrated directly into the body of the overvoltage protection, thereby eliminating the problem of installing the choke directly into the circuits of the lighting unit, into the conductors between the overvoltage protection device and the driver.

The present invention uses the knowledge that the drivers used for powering the LED elements of the street lighting are characterized by parameters which are sufficient from the point of view of the lighting unit design, but from the point of view of protection against overvoltage, their input circuits are constructed only for a low resistance which does not correspond to the values of the real load in the event of overvoltage caused by a nearby lightning strike to the ground. The lightning strike in the ground is characterized by a 10/350 µs current wave, according to STNEN 62305-1. This current wave has a substantially higher (15 to 20 times higher) energy content than 8/20 µs wave having the same amplitude and also has a significantly longer duration of the amplitude drop to half (again 15 to 20 times longer) than 8/20 µs current wave. The current driver input circuits for street lighting LEDs are usually designed for 8/20 µs current wave. Experimental verification of the use of a device for overvoltage protection in a LED lighting unit for street lighting under the load of a long 10/350 µs current wave in the direction from the ground has led to damaging the driver, whereas under the load of the 8/20 current waves the driver was not damaged. Experiments have shown that the cause of this different result is the amount of energy which is delivered to the LED system by each of the current waves when the current wave is distributed between the overvoltage protection of the lighting unit and the driver, whereby while the overvoltage protection device is constructed even for 10/350 wave, whereas the driver is not constructed for this wave. The experiments thus show that it is necessary to either modify the input circuits of the driver so that they are dimensioned even to the current wave 10/350 or use the solution according to the invention and by specific connection of the choke into the circuit of the LED street lighting to ensure such energy distribution of the current wave that the load of sufficiently dimensioned overvoltage protection is adequately increased and the load of the insufficiently dimensioned driver is lowered to an acceptable value for its input circuits. The correct load distribution must be achieved in both directions of potential danger to the lighting unit, i.e., both from the ground and from the power supply network.

### Decsription of drawings

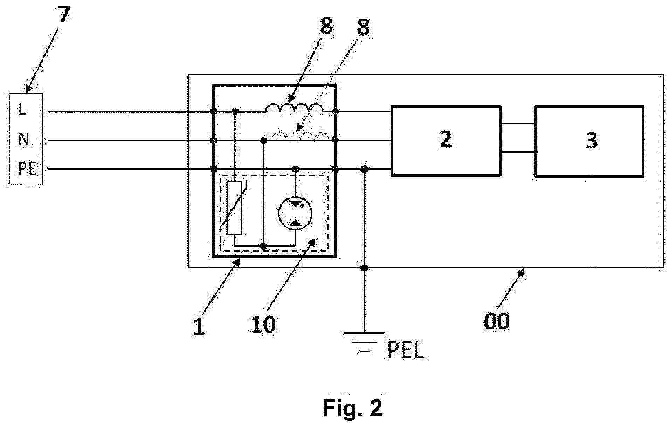

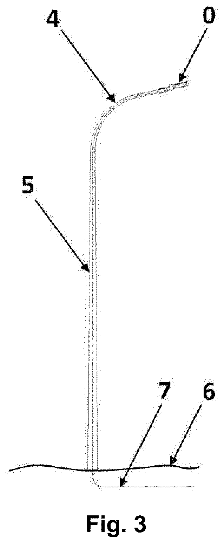

Fig. 0 schematically represents a circuit diagram of an overvoltage protection device and the main elements of a LED lighting unit for street lighting according to the current background art Fig. 1 schematically illustrates the circuitry of the overvoltage protection device and the main elements of the LED lighting lighting unit according to the present invention; Fig. 2 is a schematic representation of the circuitry of the overvoltage protection device and the main elements of a LED lighting unit for street lighting, wherein the overvoltage protection device is provided in its internal structure with a choke for implementing the present invention, and Figure 3 is a schematic representation of an outdoor street lighting pole.

### Examples of embodiment

The invention will be described with reference to an example of embodiment of circuitry of the main elements of a LED lamp **0** for street lighting (hereinafter "LED light **0** for street lighting" is referred to as "LED-SVO **0"),** which comprises a housing **00,** in which the individual elements of LED-SVO **0** are arranged.

The housing **00** is adapted to be mounted on a boom arm **4,** which is mounted on a pole **5** or post of street lighting. The pole **5** or post is anchored to the ground **6.** The L, N and PE conductors of the electrical power supply network **7** are taken to the housing **00,** either by an illustrated underground cable or by an unillustrated overhead cable. The electrical power supply network is an electrical grid which typically has a voltage of 230 V and a frequency of 50 Hz in Europe. The housing **00** is electrically connected to the ground, or to the local ground (PEL), in the present case via a metal boom arm **4** and a metal or reinforced concrete pole **5.**

Arranged in the housing **00** is a driver **2** and a LED panel **3** with individual LEDs connected to it. The driver **2** is at its input provided with three connecting points to be connected to the individual conductors (L, N, PE) of the electrical power supply network **7.**

Arranged in the housing **00** is also a overvoltage protection **1,** which is also referred to, and is to be understood as "overvoltage protection device". The overvoltage protection **1** is provided with connecting points for connecting its protection circuit to the individual conductors (L, N, PE) of the electrical power supply network **7,** this connection being carried out before the point of connection of the driver **2** to the individual conductors (L, N, PE) of the electrical power supply network **7**.

In the phase conductor L of the electrical power supply network **7** and/or in the neutral conductor N of the electrical power supply network **7** (i.e., either in one or in the other, or in both simultaneously, as is indicated in Figs. 1 and 2 by a solid and broken lines) a choke **8** is connected in the area between the point of connection of the protection circuit of the overvoltage protection **1** and the point of connection of the driver **2** input.

The choke **8** is according to the embodiment shown in Fig. 1 arranged on the respective conductor L and/or N as a separate element outside the body of the overvoltage protection **1**, or it is incorporated in the inner structure of the overvoltage protection **1**, as shown in Fig. 2 z.

In the example of embodiment in Fig. 2, the body of the overvoltage protection **1** is provided with input connecting points to connect the individual conductors (L, N, PE) the electrical power supply network **7,** which are in the inner space of the body of the overvoltage protection **1** electrically conductively connected to the output connecting points of the individual conductors (L, N, PE) the electrical power supply network **7.** To A protection circuit **10** of the overvoltage protection **1** is connected so as to interconnect the input and output points of the individual conductors (L, N, PE) of the electrical power supply network **7** in the body of the overvoltage protection **1** The choke **8** is connected inside the body of the overvoltage protection **1** in the interconnection of the input and output connecting points of the phase conductor L of the electrical power supply network **7** and/or the neutral conductor N of the electrical power supply network **7,** i.e., either in one or in the other, or in both simultaneously, as is indicated in Fig. 2 by a solid and broken lines.

The invention operates in such a manner that the overvoltage protection **1** connected to the electrical power supply network **7** protects the driver **2** and the LED panel **3** both against the overvoltage spreading through the electrical power supply network **7** and against the overvoltage from the local ground PEL, e.g., from nearby lightning strikes. Thus, if a pulse current is propagated from the PEL or PE ground, it is divided into the LED-SVO **0** circuits according to the voltage distribution at the overvoltage protection **1** input and at the driver **2** input. The choke **8** connected according to the present invention in the phase conductor L of the electrical power supply network **7** and/or in the neutral conductor N the electrical power supply network **7** between the overvoltage protection **1** and the driver **2** ensures asymmetric distribution of voltage and thereby also of the impulse current at the overvoltage protection **1** input and at the driver **2** input such that the voltage and impulse current at the overvoltage protection **1** input are substantially greater than the voltage and impulse current at the input of the driver **2.** Since the overvoltage protection **1** has its protection circuit generally constructed for a substantially higher current load than that of the driver **2** input, the asymmetric distribution of the voltage and the impulse current at the overvoltage protection **1** input and the driver **2** input substantially reduces the load on the input circuits of the driver **2,** which are more likely to withstand the load by overvoltage. The magnitude of the current flowing through the overvoltage protection **1** and the driver **2** is determined by the magnitude of the electrical resistances in each branch of the circuit, i.e. by the magnitude of the resistance of the overvoltage protection **1** and the magnitude of the resistance of the driver **2** and the dynamic resistance of the choke **8** (unit "Henry"). However, since the mainline frequency of the power supply network **7** is low, the dynamic resistance of the choke **8** does not manifest itself in terms of the power supply of the driver **2** and does not affect the consumption of the LED-SVO **0.** By correct dimensioning of the choke **8** it is possible to achieve such impulse current distribution that it corresponds to to the loadability of the overvoltage protection **1** and the loadability of the driver **2** so that the driver 2 is reliably protected by the overvoltage protection **1**.

## Claims

1. A device for the protection of LED street lighting against overvoltage which comprises an overvoltage protection (1) , a driver (2) and a LED street lighting (3), wherein the overvoltage protection (1) is connectable to individual L, N, PE conductors of the electrical power supply network (7) in front of the points of connection of the driver (2) to the individual L, N, PE conductors of the electrical power supply network (7), whereby at least one LED panel (3) is connected to the driver (2), while driver (2) and LED panel (3) are situated in a housing (00) of the LED lighting (0), **characterized in that** the housing (00) is conductively connectable to the ground or to the local ground , and in the housing (00), between the connection of the overvoltage protection (1) to the individual L, N, PE conductors of the electrical power supply network (7) and the connection of the driver (2) to the individual L, N, PE conductors of the electrical power supply network (7), a choke (8) for asymmetric distribution of the energy of a current wave between the overvoltage protection (1) and the driver (2) is connected in the phase conductor L and/or in the neutral conductor N.

2. The device according to claim 1, **characterized in that** overvoltage protection (1) is situated in a body, which is provided with input connecting points for connecting the individual L, N, PE conductors of the electrical power supply network (7), which are in the inner space of the body of the overvoltage protection (1) electrically conductively connected to the output connecting points of the individual L, N, PE conductors of the electrical power supply network (7), whereby for the interconnection of the input and output connecting points of the individual L, N, PE conductors of the electrical power supply network (7) the protection circuit (10) of the overvoltage protection (1) is connected to the body of the overvoltage protection (1) and the choke (8) is connected inside the body of the overvoltage protection (1) in the interconnection of the input and output connecting points of the phase conductor L of the electrical power supply network (7) and/or the neutral conductor N of the electrical power supply network (7).

## Patentansprüche

1. Überspannungsschutzeinrichtung von LED-Leuchten einer öffentlichen Beleuchtung, die Überspannungsschutz (1), Wandler (2) und LED-Panel (3) aufweist, wobei der Überspannungsschutz (1) an einzelne L-, N-, PE-Leiter eines Stromversorgungsnetzes (7) vor der Stelle des Anschlusses des Wandlers (2) an einzelne L-, N-, PE-Leiter des Stromversorgungsnetzes (7) anschließbar ist, wobei an den Wandler (2) mindestens ein LED-Panel (3) angeschlossen ist und der Wandler (2) sowie das LED-Panel (3) in einem Gehäuse (00) einer LED-Leuchte (0) angeordnet sind, **dadurch gekennzeichnet, dass** das Gehäuse (00) mit der Erde oder der lokalen Erde (PEL) stromführend verbindbar ist und in dem Gehäuse (00), zwischen dem Anschluss des Überspannungsschutzes (1) an einzelne L-, N-, PE-Leiter des Stromversorgungsnetzes (7) und dem Anschluss des Wandlers (2) an einzelne L-, N-, PE-Leiter des Stromversorgungsnetzes (7) in dem L-Phasenleiter und/oder in dem N-Neutralleiter eine Drossel (8) zur asymmetrischen Energieverteilung der Stromwelle zwischen den Überspannungsschutz (1) und den Wandler (2) eingeschaltet ist.

2. Einrichtung nach dem Anspruch 1, **dadurch gekennzeichnet , dass** der Überspannungsschutz (1) im Körper angebracht ist, der Eingangsanschlusspunkte zum Anschluss von einzelnen L-, N-, PE-Leitern des Stromversorgungsnetzes (7) aufweist, die in dem Innenraum des Körpers des Überspannungsschutzes (1) mit den Ausgangsanschlusspunkten von einzelnen L-, N-, PE-Leitern des Stromversorgungsnetzes (7) stromführend verbunden sind, wobei an die Verbindung von Eingangs- und Ausgangspunkten von einzelnen L-, N-, PE-Leitern des Stromversorgungsnetzes (7) im Körper des Überspannungsschutzes (1) ein Schutzkreis (10) des Überspannungsschutzes (1) angeschlossen ist und die Drossel (8) innerhalb des Körpers des Überspannungsschutzes (1) in der Verbindung von Eingangs- und Ausgangsanschlusspunkten des L-Phasenleiters des Stromversorgungsnetzes (7) und/oder des N-Neutralleiters des Stromversorgungsnetzes (7) eingeschaltet ist.

## Revendications

1. Dispositif de protection contre la surtension de luminaires LED pour éclairage public, comprenant un protecteur de surtension (1), un convertisseur (2) et un panneau LED (3), où le protecteur de surtension (1) peut être connecté à des conducteurs individuels L, N, PE du réseau électrique (7), en amont du point de connexion du convertisseur (2) aux différents conducteurs L, N, PE du réseau électrique (7), tandis qu'au moins un panneau LED (3) est connecté au convertisseur (2), avec le convertisseur (2) et le panneau LED (3) disposés dans le capot (00) du luminaire LED (0), **caractérisé en ce que** le capot (00) peut être relié de manière conductrice à la terre ou à la terre locale (PEL), et dans le capot (00), entre la connexion du protecteur de surtension (1) aux conducteurs individuels L, N, PE du réseau électrique (7) et la connexion du convertisseur (2) aux conducteurs individuels L, N, PE du réseau électrique (7), une bobine d'inductance (8) est connectée dans le conducteur de phase L et/ou dans le conducteur neutre N pour une distribution asymétrique de l'énergie des ondes de courant entre le protecteur de surtension (1) et le convertisseur (2).

2. Dispositif selon la revendication 1, **caractérisé en ce que** le protecteur de surtension (1) est disposé dans un corps muni de points de connexion d'entrée qui permettent de connecter les conducteurs individuels L, N, PE du réseau électrique (7), qui sont à l'intérieur du corps du protecteur de surtension (1) reliés de manière conductrice aux points de connexion de sortie des conducteurs individuels L, N, PE du réseau électrique (7), dans lequel un circuit de protection (10) du protecteur de surtension (1) est connecté à la connexion des points d'entrée et de sortie des conducteurs individuels L, N, PE du réseau électrique (7) dans le corps du protecteur de surtension (1) et une bobine d'inductance (8) est connectée à l'intérieur du corps du protecteur de surtension (1) dans l'interconnexion des points d'entrée et de sortie du conducteur de phase L du réseau électrique (7) et/ou du conducteur neutre N du réseau électrique (7).
